# EUROPÄISCHE PATENTSCHRIFT

(11) **EP 2 939 991 B1**
(45) Veröffentlichungstag und Bekanntmachung des Hinweises auf die Patenterteilung: **22.04.2020**
(21) Anmeldenummer: 15160307.3
(22) Anmeldetag: 23.03.2015
(51) Int. Cl.: C04B 28/04, C04B 40/06, C04B 111/28, C04B 111/60, C04B 111/80

(54) **SCHÜTTFÄHIGE MISCHUNG ZUR BILDUNG EINER THERMISCHEN DÄMMSCHICHT**
POURABLE MIXTURE FOR FORMING A THERMAL INSULATING LAYER
MÉLANGE POUVANT S'ÉCOULER DESTINÉ À LA FORMATION D'UNE COUCHE D'ISOLATION THERMIQUE

(30) Priorität: 25.03.2014 AT 502142014
(43) Veröffentlichungstag der Anmeldung: 04.11.2015
(73) Patentinhaber: Edler, Alois, 4572 St. Pankraz (AT)
(72) Erfinder: Edler, Alois, 4572 St. Pankraz (AT)
(74) Vertreter: Burger, Hannes

(56) Entgegenhaltungen:
- EP-A1- 0 819 662
- EP-A1- 1 900 705
- EP-A1- 2 014 625
- WO-A1-96/33141
- DE-A1-102004 043 837

## Beschreibung

Die Erfindung betrifft eine schütt- bzw. rieselfähige Mischung zur Bildung einer thermischen Dämm- und Ausgleichsschicht, insbesondere für Fußbodenaufbauten, welche schüttfähige Mischung durch einen nachfolgenden hydraulischen Abbindevorgang mittels eines mineralischen Bindemittels erhärtet, wie dies in Anspruch 1 gekennzeichnet ist. Die Erfindung betrifft weiterhin ein Verfahren zu dessen Herstellung.

Im Gebäudebauwesen wird an Materialien, abhängig vom jeweiligen Einsatzzweck, eine Vielzahl an Anfordernissen gestellt, bzw. werden vielfach für bestimmte Einsatzzwecke Vorgaben auch durch entsprechende Normen definiert. Daher müssen im Allgemeinen verschiedenste Materialien eingesetzt bzw. verwendet werden, um die Erfordernisse erfüllen zu können. Vielfach sind diese Erfordernisse bezüglich der Eigenschaften der eingesetzten Baumaterialien nicht miteinander vereinbar bzw. konträr zueinander, sodass in erschwerter Art und Weise zum Beispiel mehrschichtige Aufbauten und/oder Verbundbauten in zahlreichen Arbeitsschritten hergestellt werden müssen.

Durch steigende Energiekosten werden im Bereich des Bauwesens zunehmend Materialien mit wärmedämmenden Eigenschaften eingesetzt bzw. gewünscht. Andere Anwendungen legen Wert auf hohe Druckfestigkeit des eingesetzten Materials, um allmähliche Setzungen zu vermeiden bzw. ausreichend hohe Flächenbelastungen zu erreichen.

Bisher wurden zur Nivellierung eines Rohbodens bzw. der Rohdecke meist zugeschnittene Wärmedämmplatten verwendet. Derartige Wärmedämmplatten bestehen in der Regel aus expandiertem Polystyrol (EPS) als Grundmaterial. Auf die EPS-Schicht werden gegebenenfalls eine oder mehrere Trennschicht(en), Fußbodenheizungen oder weitere funktionale Elemente, und abschließend der Estrich aufgebracht. Nachteilig bei einer Verwendung von vorgefertigten EPS-Platten ist, dass eine fugenlose Verlegung der Platten praktisch unmöglich bzw. äußerst zeitaufwändig ist. Zum Beispiel werden Installationsvorrichtungen der Haustechnik, wie etwa Wasser-, Elektro- und/oder Lüftungsinstallationen, bevorzugt auf einer Rohdecke bzw. unmittelbar auf dem Rohboden montiert. Durch das dabei nötige Zuschneiden bzw. Freistellen der EPS-Platten entstehen erzwungenermaßen Kälte- bzw. Wärmebrücken, was sich nachteilig auf das Wärmedämmvermögen auswirkt.

In neuerer Zeit werden Fußböden mit Wärmedämmung meist durch einen mehrschichtigen Aufbau realisiert. Dabei wird auf den Rohboden bzw. die Rohdecke meist zuerst eine Nivellierungsschicht aufgebracht, um etwaig hervorstehende Betonteile oder Rohrsysteme für Sanitär- bzw. Elektroinstallationen etc. auszugleichen und für die weiteren Aufbauschichten eine möglichst ebene Oberfläche zu schaffen. Als eigentliches Wärmedämmmaterial werden sodann auf die Ausgleichschicht häufig die oben genannten vorgeformten Platten mit wärmedämmender Wirkung verlegt. Auch hier tritt der Nachteil von Wärme- bzw. Kältebrücken auf.

Weiters ist es aus dem Stand der Technik vorbekannt, schüttfähiges Material zur Bildung einer Fußbodendämmschicht zu verwenden. Auf die Ausbildung einer Niveau-Ausgleichsschicht kann in solchen Fällen allenfalls verzichtet werden. Als Basismaterial für Schüttdämmstoffe werden hauptsächlich sogenannte Naturdämmstoffe oder mineralische Produkte verwendet. Beispiele für Naturdämmstoffe sind Kork, Wiesengras- und/oder ZelluloseFlocken, Hanfschüttungen oder Getreidegranulat. Als mineralische Dämmstoffe kommen unter anderem Blähperlit, Mineralfasergranulate oder Blähbeton in Frage. In vielen Fällen müssen jedoch aufgrund einer relativ hohen Wärmeleitfähigkeit hohe Dämmstärken realisiert bzw. verbaut werden. Weiters ist in vielen Fällen von Nachteil, dass diese Materialien zur Bereitstellung einer ausreichenden Druckfestigkeit verdichtet werden müssen, bzw. muss die Druckfestigkeit durch Zuschlagstoffe gewährleistet werden. Solche Maßnahmen bedingen allerdings häufig eine Verschlechterung der Wärmedämmeigenschaften.

Schließlich ist es bekannt, expandiertes Polystyrol (EPS) als Bestandteil solcher schüttfähigen Wärmedämmstoffe zu verwenden, welches EPS sich durch besonders gute, wärmedämmende Eigenschaften auszeichnet. Solche EPS-haltigen Schüttdämmstoffe werden üblicherweise mittels Zement hydraulisch gebunden, der Abbindevorgang wird also durch die Zugabe von Anmachwasser gestartet.

In der EP 0 819 662 A1 ist ein Dämmstoff zur Wärme- und Trittschalldämmung offenbart. Die Mischung zur Herstellung des Dämmstoffes besteht aus Schaumstoffgranulat, insbesondere aus Poylstyrolgranulat und einem zementhaltigen Bindemittel. Das Bindemittel enthält neben dem Zementanteil einen mindestens 10 Gew.% des Zementanteils ausmachenden Anteil an amorpher Kieselsäure. Die Mischung kann zur Herstellung des Dämmstoffes mit Wasser angemacht und ausgehärtet werden. Hierbei wird das vorgemischte Bindemittel unter Beigabe von Anmachwasser zunächst mit einem Teil des Schaumstoffgranulats vermischt, und anschießend der restliche Teil des Schaumstoffgranulats zugesetzt.

Der vorliegenden Erfindung liegt die Aufgabe zugrunde, eine Wärmedämm- und Ausgleichsschicht zu schaffen, welche eine verbesserte, möglichst einfache Verarbeitung bietet und zugleich möglichst gute bauphysikalische Eigenschaften aufweist.

Die Aufgabe der Erfindung wird durch die Maßnahmen gemäß Anspruch 1 gelöst. Diese Lösung ist gemäß den Merkmalen des Anspruchs 1 dadurch charakterisiert, dass eine schüttfähige Mischung zur Bildung einer thermischen Dämm- und Ausgleichsschicht, insbesondere für Fußbodenaufbauten bereitgestellt wird, welche schüttfähige Mischung durch einen nachfolgenden hydraulischen Abbindevorgang erhärtet, wobei die Mischung besteht aus:
- einer EPS-Trockenmischung,
   bestehend aus,
- 24 Gew.% expandiertes Pylostyrol (EPS) in granularer, rieselfähiger Form, bestehend aus einem EPS-Partikel-Gemisch umfassend 50 Gew. % frisch geschäumte Polystyrol-Partikel und 50 Gew. % rezyklierte EPS-Partikel,
- 76 Gew.% mineralische Bindemittel-Trockenmischung,
   wobei die mineralische Bindemittel-Trockenmischung besteht aus
- 94 Gew.% Weißzement,
- 4 Gew.% Kieselsäure als Haftvermittler zwischen den EPS-Partikeln und dem Weißzement, und
- 2 Gew.% nicht aktiviertes Kaolin,
   und wobei zu der EPS-Trockenmischung Wasser in einem Mengenanteil von 33 Gew. % - bezogen auf ein resultierendes Gesamtgewicht der schüttfähigen Mischung nach Abschließen eines Nass-Mischvorgangs - beigemengt ist.

Ein sich aus den Merkmalen des Anspruchs 1 ergebender, wesentlicher Vorteil ist, dass die Förderbarkeit bzw. Verarbeitbarkeit der schüttfähigen Mischung durch die Zugabe von Kaolin zu der mineralischen Bindemitteltrockenmischung deutlich verbessert werden kann. Das eingesetzte Kaolin wirkt dabei aufgrund seiner chemischen Zusammensetzung (hydratisiertes Aluminiumsilikat) bzw. Struktur (kristallisiertes Tonmineral mit schichtartiger Struktur) während der Verarbeitung der schüttfähigen Mischung, insbesondere im Zuge von dessen Förderung zum Applikationsort, als Schmiermittel. Üblicherweise werden derartige schütt- bzw. rieselfähige Mischungen am Ort der Verarbeitung, mittels Schlauch- und/oder Rohrsystemen an den eigentlichen Applikationsort gefördert. Dabei wird durch das Kaolin das AneinanderVorbeigleiten der Bestandteile der schüttfähigen Mischung, und insbesondere das Gleiten entlang der Oberfläche eines Fördermittels, welches zum Beispiel durch einen Förderschlauch oder ein Rohr gebildet sein kann, unterstützt bzw. wesentlich verbessert. Dadurch wird der Transport der schüttfähigen Mischung zur Bildung einer thermischen Dämm- und Ausgleichsschicht über größere Distanzen bzw. Förderhöhen ermöglicht, was insbesondere auf Großbaustellen, beispielsweise bei Einbringung der erfindungsgemäßen, schüttfähigen Mischung in Zwischengeschoßdecken von mehrstöckigen Hochhäusern, von besonderem Vorteil ist. Gleichzeitig können auch vergleichsweise hohe Förderraten bzw. Durchsätze realisiert werden, wodurch Arbeitszeit zum Aufbringen der Schüttung eingespart werden kann. Die Wahrscheinlichkeit von Verstopfungen kann dabei auch bei Einsatz von standardmäßigen, bisher eingesetzten Fördereinrichtungen minimiert werden. Weiters können so etwaige Verzögerungen im Baufortschritt anderer Gewerke vermieden bzw. hintangehalten werden.

Durch die Verbesserung des Fließverhaltens der schüttfähigen Mischung wird außerdem gewährleistet, dass etwaig vorhandene Unebenheiten der Boden-Rohkonstruktion, welche insbesondere durch diverse Gebäudeinstallationen bzw. Rohrleitungen verursacht sein können, während des Schüttvorgangs bzw. während der Aufbringung der Mischung möglichst vollständig von der schüttfähigen Mischung ummantelt bzw. überdeckt werden. Durch das Beimengen von Kaolin ist eine fugenlose Verlegung bzw. eine lückenlose Dämm- und Ausgleichsschicht geschaffen, sodass ein ungewolltes Entstehen von Kälte- und/oder Wärmebrücken im Fußboden bzw. in Zwischendecken zumindest weitestgehend vermieden wird. Außerdem kann damit gleichzeitig eine wärmedämmende Nivellierungs- bzw. Ausgleichschicht bereitgestellt werden, welche eine vorteilhafte, ebene Auflagefläche für das Aufbringen von weiteren Fußbodenaufbauten bzw. von Fußbodenbelägen bietet.

In der Regel verzögert bzw. verschlechtert Kaolin in seiner nicht-aktivierten Form den hydraulischen Abbindevorgang in zementbasierenden Bindemitteln. Um eine Verwendung als Bestandteil in hydraulisch abbindenden Mischungen zu ermöglichen, wird Kaolin üblicherweise bei hohen Temperaturen im Bereich zwischen 550 °C und 850 °C aktiviert und in sogenanntes "Metakaolin" umgewandelt. Unmodifiziertes bzw. nicht aktiviertes Kaolin wird hauptsächlich als Füllstoff und/oder Weißpigment, zum Beispiel in der Papier-, Gummi-, aber auch der Lebensmittelindustrie eingesetzt.

Überaschenderweise wurde nun gefunden, dass sowohl das hydraulische Abbindeverhalten der zementbasierenden, schüttfähigen Materialmischung als auch die Eigenschaften des nach dem Abbinden erhaltenen, zementgebundenen Dämmstoffes, durch das Beifügen von unmodifiziertem bzw. nicht aktivierten Kaolin nicht merklich bzw. nicht wesentlich beeinflusst werden. Somit wurde festgestellt, dass nicht aktiviertes Kaolin insbesondere zur Verbesserung der Förderbarkeit schüttfähiger Mischungen genutzt werden kann, ohne erhebliche Nachteile hinsichtlich des nachfolgenden Abbindevorgangs bzw. hinsichtlich der Eigenschaften der nach dem Abbinden erhaltenen thermischen Dämmschicht in Kauf nehmen zu müssen. In besonders zweckmäßiger Weise enthält dabei die Bindemittel-Trockenmischung keine trassbasierten Bestandteile.

Durch den vergleichsweise geringen Gewichtsanteil an mineralischem Bindemittel in der erfindungsgemäßen, schüttfähigen Mischung wird auch nur eine relativ geringe Menge an Anmachwasser für den anschließenden Abbindevorgang benötigt. Dadurch kann die Abbindezeit verhältnismäßig kurz gehalten werden. Somit kann nach der Aufbringung eine relativ rasche Begehbarkeit erzielt werden, bzw. ist das durch das hydraulische Abbinden der schüttfähigen Mischung entstehende Wärmedämmmaterial, insbesondere die entstehende thermische Dämm- und Ausgleichsschicht, vergleichsweise schnell für nachfolgende Verlegearbeiten geeignet, insbesondere belegereif.

Außerdem wurde gefunden, dass trotz der verhältnismäßig geringen Menge an mineralischem Bindemittel bzw. Anmachwasser, nach dem Abbinden der schüttfähigen Mischung ein thermischer Dämmstoff mit sehr guten Druckfestigkeitseigenschaften erzielt wird. Gleichzeitig kann aufgrund des relativ hohen Mengenanteils an EPS, ein Dämmmaterial mit hervorragenden thermischen Dämmeigenschaften bzw. Wärmedämmwerten bereitgestellt werden.

Durch das Beimengen von Kieselsäure wird eine Substanz zur schüttfähigen Mischung hinzugefügt, welche augenscheinlich insbesondere die Haftung zwischen den EPS- und Weißzement-Partikel verbessert. In diesem Zusammenhang wurde im Zuge von Trockenmischvorgängen zum Abmischen bzw. Vermengen der schüttfähigen EPS-Trockenmischung beobachtet, dass die Kieselsäure-Partikel die EPS-Partikel zumindest nahezu vollständig ummanteln. Die Kieselsäure kann nachfolgend quasi als Haftvermittler zwischen den EPS-Partikeln und Weißzement wirksam werden. Dadurch ist die Herstellung einer sehr homogenen, schüttfähigen Mischung in nur einem Arbeitsschritt ermöglicht, sodass nach dem Abbindevorgang ein Verbunddämmstoff mit sehr homogener makroskopischer Struktur, insbesondere ein thermisches Dämmmaterial bzw. eine Wärmedämmschicht resultieren kann, welche zumindest weitestgehend ohne Fehlstellen bzw. Sollbruchstellen vorliegt. Dies wirkt sich einerseits positiv auf die erreichbaren thermischen Dämmwerte, als auch auf positiv auf die Belastbarkeit des Materials bzw. der Dämmschicht aus.

Schließlich entfaltet der nach hydraulischem Abbinden der schüttfähigen Mischung erhaltene Wärmedämmstoff bzw. die thermische Dämmschicht, auch eine gute schalldämmende, insbesondere trittschalldämpfende bzw. trittschall-mindernde Wirkung.

Die erfindungsgemäße, schüttfähige bzw. formbare Mischung ist vor allem im technischen Anwendungsbereich des Bauwesens, unter anderem im Gebäudebau als Baustoff mit sehr guten Wärmedämmeigenschaften und verbesserter Verabeitbarkeit und verbesserten Fördereigenschaften einsetzbar. Beispielsweise eignet sich das schütt- bzw. rieselfähige Dämmmaterial besonders für den flächigen Einsatz als Dämmstoff bzw. Dämmschicht in erdberührenden Bauteilen, Zwischengeschoßdecken, für die Dämmung von Geschoßdecken, Holzdecken, Flach- und Steildächern, unter Fußbodenheizungen oder dergleichen. Ebenso kann die Materialmischung auch aufgrund der Schüttfähigkeit bzw. verbesserten Verarbeitbarkeit zum Beispiel zum Niveauausgleich für Trockenestriche oder für Poolhinterfüllungen und Gewölbeauffüllungen verwendet werden.

Eine Weiterbildung der Erfindung sieht vor, dass das nicht aktivierte Kaolin eine spezifische Oberfläche zwischen 6,5 und 11,5 m²/g aufweist. Dadurch wird ein Kaolin bereitgestellt, welches aufgrund des hohen Oberflächen- zu Gewichtsverhältnis, besonders gut geeignet ist, um die Verarbeitungs- bzw. Fördereigenschaften der schüttfähigen Mischung zu verbessern. Dieser vorteilhafte Effekt kann vor allem dadurch begründet sein, dass der schmierende Effekt des nicht-aktivierten Kaolins, welcher zu der Verbesserung der Verarbeitbarkeit und Förderbarkeit der schüttfähigen Mischung führt, hauptsächlich durch die Oberfläche der Kaolin-Partikel hervorgerufen wird.

Die spezifische Oberfläche des Kaolins kann zum Bespiel durch eine sogenannte BET-Messung ermittelt werden. Die zur Durchführung einer solchen BET-Messung empfohlene Vorgehensweise kann beispielsweise der DIN 66131 entnommen werden.

Bevorzugt wird ein nicht aktiviertes Kaolin verwendet, welches einen Massenanteil von zumindest 90 Massenprozent an Kaolin-Teilchen mit einer Korngröße kleiner als 20 µm aufweist. Durch diese Maßnahme kann eine sehr homogene Verteilung des Kaolins in der schüttfähigen Mischung erreicht werden, bzw. kann die benötigte Dauer des Mischvorgangs zur Herstellung einer homogenen Bindemitteltrockenmischung verkürzt werden. Weiters kann der Schmiermittel-Effekt des Kaolins durch diese homogene Verteilung, während der Verarbeitung bzw. Förderung quasi überall in der bzw. an der schüttfähigen Mischung wirksam werden, ohne dass eine allzu große Menge an Kaolin benötigt wird.

Geeignete Kaoline sind beispielsweise unter den Produktnamen "Kaolin FP 80 gemahlen" der Firma Dorfner, und "Kamig Kaolin S2" der Firma Kamig erhältlich.

Bei der schüttfähigen Mischung ist vorgesehen, dass das rieselfähige EPS-Granulat 50 Gew.% frisch geschäumtes Polystyrol, mit einer Korngröße zwischen 3 und 8 mm und einer Schüttdichte zwischen 10 und 11 kg/m³ umfasst. Durch diese Maßnahme können insbesondere die mechanischen Eigenschaften, sowie die thermische Dämmwirkung des Dämmmaterials, welches nach dem hydraulischen Abbindevorgang der schüttfähigen Mischung bereitgestellt ist, deutlich verbessert werden.

Es wird eine schüttfähige Mischung bereitgestellt, bei welcher das rieselfähige EPS-Granulat 50 Gew.% rezykliertes, und gegebenenfalls zerkleinertes EPS-Granulat beinhaltet. Insbesondere sind dabei rezyklierte, zerkleinerte bzw. geschredderte EPS-Wärmedämmplatten oder handelsübliches Verpackungsstyrol, mit einer Korngröße zwischen 0,1 und 9 mm, und einer Schüttdichte zwischen 12 und 18 kg/m³ zur Herstellung der schüttfähigen Mischung geeignet. Diese Vorgehensweise ist sowohl in ökonomischer als auch in ökologischer Hinsicht von großem Vorteil. Bei Einhaltung der angegeben Grenzwerte für die Mengenanteile an rezyklierten EPS sind ohne weiteres normgerechte Wärme- und Trittschalldämmungen bzw. Dämmschichten realisierbar.

Zur Herstellung der in der schüttfähigen Mischung beinhalteten mineralischen Bindemittel-Trockenmischung wird bevorzugt gesichteter Weißzement verwendet. Unter Sichtung wird dabei ein Trennvorgang verstanden, bei welchem eine Abtrennung schwebefähiger Teilchen mit geringer Dichte, also verhältnismäßig großem Oberflächen- zu Volums-Verhältnis, durch Mitreißen in einem Luftstrom. Die auf diese Weise abgetrennten Bestandteile eines Gemisches werden als "gesichtet" bezeichnet. Solche gesichteten Bestandteile zeichnen sich insbesondere durch sehr kleine Korngrößen aus, bzw. kann der Anteil an Partikeln mit größerer Korngröße sehr gering gehalten werden, was sich insbesondere vorteilhaft auf die mechanischen Eigenschaften der nach Abbinden der schüttfähigen Mischung resultierenden, thermischen Dämmschicht auswirken kann.

Außerdem ist es von Vorteil, wenn zur Bildung der mineralische Bindemittel-Trockenmischung ein gesichteter Weißzement verwendet wird, welcher eine spezifische Oberfläche nach Blaine von zumindest 3.000 cm²/g, und bis zu 10.000 cm²/g aufweist. Durch diese Feinheit der Weißzementpartikel ist die Herstellung einer schüttfähigen Mischung mit sehr homogener Verteilung der beinhalteten Stoffe ermöglicht. Dies kann insbesondere Vorteile für die Druckfestigkeit der - durch hydraulisches Abbinden der schüttfähigen Mischung herstellbaren - thermischen Dämmschicht hervorbringen. Weiters wirkt sich das hohe Oberflächen- zu Gewichts-Verhältnis positiv auf den Ablauf des hydraulischen Abbinde-Vorgangs der schüttfähigen Mischung aus, bzw. kann der hydraulische Abbindevorgang zur Herstellung des thermischen Dämmstoffes im Vergleich zu Standard-Zementen beschleunigt werden.

Die angegebenen Werte für die spezifische Oberfläche nach Blaine können labortechnisch mit einem sogenannten Blaine-Gerät ermittelt werden, vgl. zum Beispiel:
Gille, F.: Die Prüfung der Mahlfeinheit mit dem Gerät von Blaine. Wiesbaden: Bauverl., 1951 (Schriftreihe der Zementindustrie 7)

Durch die Verwendung von Weißzement, welcher keine Chromatreduzierer aufweist, wird eine vergleichsweise lange Haltbarkeit bzw. Verwendbarkeit der mineralischen Bindemittel-Trockenmischung erzielt. Typischerweise müssen Chromatreduzierer Zementen bzw. zementhaltigen Mischungen zur Vermeidung der sogenannten "Maurerkrätze" zugefügt werden, welche durch im Zement enthaltene, wasserlösliche Chromat-Verbindungen hervorgerufen werden kann. Diese Chromatreduzierer werden jedoch während der Lagerung des Zements - primär aufgrund der Einwirkung von Luftsauerstoff - relativ rasch zerstört. Dadurch ist die Lagerbeständigkeit bzw. die maximale Lagerungsdauer konventioneller Zementsorten, insbesondere von Grauzement, in der Regel sehr beschränkt. Durch den Einsatz von Weißzement, in welchem Chromatreduzierer im Hinblick auf den Arbeitnehmerschutz nicht erforderlich sind, wird eine verbesserte Lagerfähigkeit des mineralischen Bindemittels erreicht, bzw. insgesamt die Qualität der schüttfähigen Mischung deutlich gesteigert. Insbesondere sind trotz des vergleichsweise hohen Preises von Weißzement durch diese Maßnahmen logistische und wirtschaftliche Vorteile erzielbar.

Ein Beispiel für einen geeigneten Weißzement ist der unter dem Produktnamen "Weiss Strong R" erhältliche weiße Portlandzement der Firma Dyckerhoff.

Für die Herstellung der mineralischen Bindemittel-Trockenmischung hat es sich als vorteilhaft erwiesen, eine Kieselsäure mit einer spezifischen Oberfläche von zumindest 10 m²/g, insbesondere zwischen 16 m²/g und 20 m²/g zu verwenden. Dadurch kann während des Trockenmisch-Vorganges zur Herstellung der schüttfähigen Mischung, bei welchem die mineralischen Bindemittel-Trockenmischung mit dem EPS-Gemisch vermengt wird, eine möglichst gute, initiale Benetzung bzw. Ummantelung der EPS-Partikel durch die Kieselsäure sichergestellt werden. Dies kann nachfolgend eine besonders gute Haftung zwischen den EPS-Partikeln und dem Weißzementpartikeln bewirken, wodurch sich insbesondere die Druckfestigkeit bzw. Belastbarkeit der - nach dem Abbinden der schüttfähigen Mischung erhaltenen -thermischen Dämm- und Ausgleichsschicht, weiter steigern lässt. Die Kieselsäure kann somit quasi als Haftvermittler zwischen den EPS-Partikeln und der Weißzementkomponente wirksam sein.

Als Beispiel für eine geeignete, amorphe Kieselsäure wird an dieser Stelle die unter dem Produktnamen "RW-Füller Q1" erhältliche Kieselsäure der Firma RW silicium genannt.

Um eine möglichst gute Verarbeitbarkeit gewährleisten zu können ist es weiters von Vorteil, wenn die schüttfähige Mischung zur Bildung eines thermischen Dämmmaterials eine Frischmörtel-Rohdichte zwischen 85 kg/m³ und 100 kg/m³, insbesondere zwischen 90 kg/m³ und 95 kg/m³ aufweist.

Die Aufgabe der Erfindung wird aber auch dadurch gelöst, dass ein Verfahren zur Herstellung einer schüttfähigen Mischung zur Bildung einer thermischen Dämm- und Ausgleichsschicht durch einen nachfolgenden, hydraulischen Abbindevorgang, bereitgestellt wird, welches Verfahren folgende, sequentiell nacheinander ausgeführte Verfahrensschritte umfasst:
- Bereitstellen von expandierten EPS-Partikeln, bestehend aus einem EPS-Partikel-Gemisch umfassend 50 Gew. % frisch geschäumte Polystyrol-Partikel und 50 Gew. % rezyklierte EPS-Partikel, insbesondere mit einer Korngröße zwischen 0,1 und 9 mm, in einem Mengenanteil von 24 Gew. %;
- Bereitstellen einer mineralischen Bindemittel-Trockenmischung in einem Mengenanteil von 76 Gew.%, wobei die mineralische Bindemittel-Trockenmischung aus 94 Gew.% Weißzement und 4 Gew.% Kieselsäure als Haftvermittler zwischen den EPS-Partikeln und dem Weißzement und 2 Gew.% nicht aktiviertes Kaolin besteht,
- Trockenes Vermengen bzw. Mischen der bereitgestellten EPS-Partikel-Mischung mit der bereitgestellten mineralischen Bindemittel-Trockenmischung zur Bildung einer EPS-Trockenmischung;
- vorzugsweise Erfassen bzw. Kontrollieren der Schüttdichte der EPS-Trockenmischung zur Qualitäts-Kontrolle; und
- Beimengen von Wasser zu der EPS-Trockenmischung in einem Mengenanteil von 33 Gew. % - bezogen auf ein resultierendes Gesamtgewicht der schüttfähigen Mischung nach Abschließen eines Nass-Mischvorgangs.

Durch diese Vorgehensweise kann eine schüttfähige Mischung zur Bildung einer WärmeDämm- und Ausgleichsschicht hergestellt bzw. abgemischt werden, welche einerseits ausgezeichnete Verarbeitungseigenschaften, insbesondere eine deutlich verbesserte Förderbarkeit im Zuge der Einbringung bzw. Verarbeitung aufweist. Zusätzlich kann aber auch - nach dem hydraulischen Abbindevorgang - eine Dämmschicht mit hervorragenden Wärme- und Schalldämmeigenschaften sowie gleichzeitig einer hohen Druckfestigkeit bereitstellt werden. Der Verfahrensschritt zur Ermittlung der Schüttdichte der EPS-Trockenmischung dient dabei der Erfüllung der in der ÖNORM B 6550-1 spezifizierten Anforderungen an Wärme- und Trittschalldämmungen, welche auf EPS-Schüttungen basieren. Die nach dem hydraulischen Abbindevorgang erhärtete thermische Dämm- und Ausgleichsschicht ist insbesondere für Fußbodenaufbauten geeignet.

Schließlich wird die Aufgabe der Erfindung auch dadurch gelöst, dass ein Wärmedämmstoff bzw. eine thermische Dämm- und Ausgleichsschicht bereitgestellt wird, welche Dämm- und Ausgleichsschicht durch hydraulisches Abbinden einer schüttfähigen Mischung gemäß einem der Ansprüche 1-10 geschaffen ist.

Dabei ist es zweckmäßig, wenn die Dämm- und Ausgleichsschicht eine Wärmeleitfähigkeit von 0,042 W/mK, sowie eine Druckspannung bei 10% Stauchung von 82 kPa, aufweist.

Zum besseren Verständnis der Erfindung wird diese im Folgenden anhand von Ausführungsbeispielen und den folgenden Figuren näher erläutert. Dabei zeigen die Figuren jeweils in stark vereinfachter, schematischer Darstellung:
- Fig. 1: ein Ablaufschema des Verfahrens zur Herstellung der schüttfähigen, hydraulisch abbindenden Mischung;
- Fig. 2: ein Anwendungsbeispiel für die schüttfähige Mischung zur Bildung einer thermischen Dämm- und Ausgleichsschicht.

### Ausführungsbeispiel I: Schüttfähige Mischung.

Nachfolgend werden zwei Ausführungsformen - eine erfindungsgemäße Mischung 1 und eine Vergleichsmischung 2 - für schüttfähige Mischungen zur Bildung einer thermischen Dämm- und Ausgleichsschicht angeführt, welche schüttfähigen Mischungen durch das Beifügen von bzw. Anmachen mit Wasser, in einem nachfolgenden hydraulischen Abbindevorgang härtbar sind. Außerdem werden die Verfahrensschritte zur Herstellung der jeweiligen schüttfähigen Mischung näher beschrieben.

In allen Fällen wurden zur Herstellung der schüttfähigen Mischung folgende Komponenten verwendet:
- EPS-Partikel-Gemisch: Es wurde ein rieselfähiges Gemisch aus expandierten Polystyrol-Partikeln (EPS) bereitet, welches Gemisch 50 Gew. % frisch hergestellte bzw. frisch geschäumte Polystyrol-Partikel beinhaltet. Weiters umfasst das EPS-Partikel-Gemisch 50 Gew. % EPS-Partikel, welche durch Zerkleinern bzw. Schreddern von EPS-Platten gewonnen wurden. Die Korngrößen der frisch geschäumten Polystyrol-Partikel lagen dabei ungefähr in einem Bereich zwischen 3 und 8mm, die Korngrößen des durch Schreddern von EPS-Platten erhaltenen EPS-Granulats lagen ungefähr in einem Bereich zwischen 0,1 und 9 mm. Die beiden EPS-Partikel-Schüttungen werden in einem mechanischen Rührwerk zu einer visuell wahrnehmbar homogenen Mischung vermischt.
- Weißzement: Es wurde ein unter dem Produktnamen "Weiss Strong R" der Firma Dyckerhoff, kommerziell erhältlicher Weißzement verwendet.
- Kieselsäure: Es wurde eine kommerziell unter dem Produktnamen "RW- Füller Q1" der Firma RW silicium, erhältliche Kieselsäure verwendet.
- Kaolin: Zur Herstellung der im Folgenden als schüttfähige Mischung 1 bezeichneten Mischung, wurde ein, unter dem Produktnamen "Kamig Kaolin S2" der Firma Kamig, kommerziell erhältliches Kaolin verwendet.
- Wasser: In allen Fällen wurde gewöhnliches Leitungswasser verwendet.

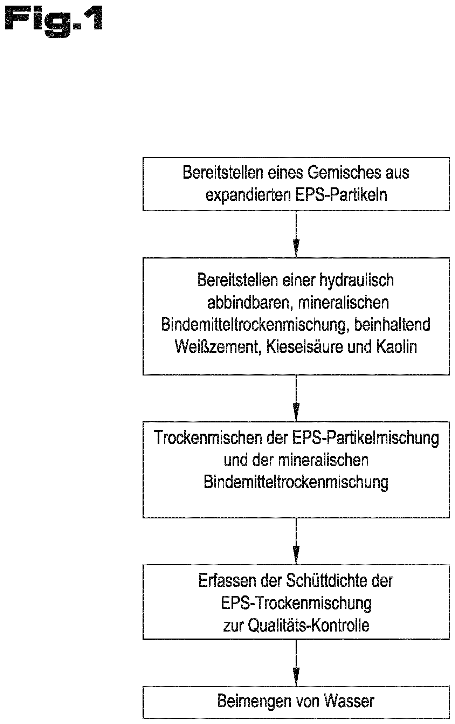

Die Verfahrens schritte zur Bereitstellung einer hydraulisch abbindenden, schüttfähigen Mischung zur Bildung einer thermischen Dämmschicht sind schematisch aus Fig. 1 ersichtlich, und werden im Folgenden näher erläutert.

### Schüttfähige Mischung 1:

Es wurde zunächst eine mineralische Bindemitteltrockenmischung bereitgestellt, welche folgende Bestandteile umfasst:
- 94 Gew. % Weißzement;
- 4 Gew. % Kieselsäure; und
- 2 Gew. % Kaolin.

Die Bindemitteltrockenmischung wurde in einem konventionellen Rührwerk abmischt, bis ein visuell wahrnehmbar homogenes Gemisch resultierte.

Weiters wurde ein EPS-Partikel-Gemisch bereitgestellt, welches EPS-Gemisch wie oben angegeben 50 Gew. % frisch geschäumten, und 50 Gew. % rezyklierten EPS-Partikeln umfasste.

Die mineralische Bindemitteltrockenmischung und das EPS-Partikelgemisch wurden anschließend in einem weiteren Rührwerk miteinander vermengt. Dabei wurden dem TrockenMischvorgang jeweils Mengenanteile von 24 Gew. % EPS-Partikel-Gemisch und 76 Gew. % mineralische Bindemitteltrockenmischung zugeführt. Während des Mischvorgangs wurde stichprobenartig die Schüttdichte der EPS-Trockenmischung gemäß den Vorschriften der ÖNORM - EN 1097-3 ermittelt. Die so ermittelte Schüttdichte der EPS-Trockenmischung betrug im Mittel 70 kg/m³, mit einer Schwankungsbreite von ± 10 %, und lag damit innerhalb der in der ÖNORM B 6550-1 geforderten Grenzen.

Anschließend an diesen Trockenmischvorgang erfolgte das Beimengen des Anmachwassers. Dabei wurde das Anmachwasser elektronisch kontrolliert über Sprühdüsen zugeführt, unter gleichzeitigem, ständigem Umwälzen der EPS-Bindemittel-Mischung. Insgesamt wurden - bezogen auf das resultierende Gesamtgewicht des EPS-Frischmörtels nach Abschließen des Nass-Mischvorgangs - 33 Gew. % Wasser beigemengt. Die Frischmörtelrohdichte wurde nach erfolgtem Nass-Mischvorgang zu 92 kg/m³ ermittelt. Die Messung erfolgte nach ÖNORM - EN 12350-6.

### Schüttfähige Mischung 2; Vergleichsmischung:

Die Herstellung der schüttfähigen Mischung 2 erfolgte analog zur Herstellung der schüttfähigen Mischung 1, mit der Ausnahme, dass das mineralische Bindemittel der schüttfähigen Mischung 2 kein Kaolin enthielt, bzw. die folgenden Bestandteile umfasste:
- 95,9 Gew. % Weißzement;
- 4,1 Gew. % Kieselsäure.

Im Gegensatz zu normalerweise verwendeten Zementen, welche zur Vermeidung der sogenannten "Maurerkrätze" sogenannte Chromatreduzierer enthalten, die bei andauernder Lagerung des Zements jedoch relativ rasch ihre Wirkung verlieren, tritt bei beiden Mischungen aufgrund des verwendeten Weißzementes das Problem der beschränkten Lagerfähigkeit nicht auf.

### Ausführungsbeispiel II: Verarbeitbarkeit/Förderbarkeit.

Es wurden einige Versuche durchgeführt, um die Förderbarkeit der kaolinhaltigen Mischung 1 im Vergleich zur Förderbarkeit der kaolinfreien Mischung 2 zu eruieren. Dabei wurde für die beiden, gemäß dem Ausführungsbeispiel I hergestellten, schüttfähigen Mischungen 1 und 2, jeweils die erreichbare Förderstrecke eruiert. Die schüttfähigen Mischungen 1 und 2 wurden hierzu in jeweils einer gleichen Versuchsanordnung aus einer Überdruckkammer gefördert. Zur Förderung der schüttfähigen Mischungen diente Druckluft, welche mittels eines Kompressors erzeugt wurde. Der Förderdruck wurde in beiden Fällen auf 5 bar eingestellt und möglichst konstant gehalten. Die beiden schüttfähigen Mischungen 1 und 2 wurden jeweils über eine Kupplung in einen konventionellen Estrichförder-Schlauch überführt. Der Durchmesser dieser Kupplung betrug 45 mm, der Durchmesser des Estrichförder-Schlauches betrug 50 mm. Der genaue Versuchsaufbau, beispielsweise hinsichtlich abschnittsweiser Führung des Förderschlauches, Gesamtförderhöhe bzw.-strecke, abschnittsweisen Gefälle etc., wurde für die jeweiligen Vergleichsversuche variiert. Der Versuchsaufbau war dabei aber für den jeweiligen Vergleichsversuch, für die schüttfähigen Mischungen 1 und 2, jeweils derselbe.

Als Ergebnis der Förder-Versuche wurde erhalten, dass die schüttfähige, kaolinhaltige Mischung 1 in allen Fällen um 40 - 55 % weiter gefördert werden konnte als die schüttfähige Mischung 2 ohne Kaolin. Somit konnte gezeigt werden, dass durch Beimengen von Kaolin zu einer schüttfähigen Mischung insbesondere eine deutliche Steigerung der erreichbaren Förderstrecke bzw. Förderhöhe für eine derartige schüttfähige Mischung erzielbar ist.

### Ausführungsbeispiel III; thermische Dämmschicht.

Zusätzlich zu den Förder-Versuchen wurden auch Messungen zur Erfassung der Eigenschaften der - nach dem Abbinden der schüttfähigen Mischungen erhaltenen - thermischen Dämmschicht durchgeführt. Die Ergebnisse sind in der nachfolgenden Tabelle zusammengefasst.

| Schüttfähige Mischung Nr. | Wärmeleitfähigkeit | Druckspannung | Trittschallminderung |
|---|---|---|---|
| | [W/mK] | [kPa] | [dB] |
| 1 | 0,042 | 82 | -23 |
| 2 | 0,043 | 84 | -23 |

Dabei wurde der Nennwert für die Wärmeleitfähigkeit gemäß ÖNORM - EN 12667 bzw. ÖNORM B 6015-1 und -2 ermittelt. Die Messwerte für die Druckspannung wurden gemäß ÖNORM - EN 826 bei 10 % Stauchung ermittelt. Die Werte für die Trittschallminderung wurden gemäß EN ISO 717-2 ermittelt.

Wie aus der Tabelle ersichtlich ist, kann aus beiden, schüttfähigen Mischungen 1 und 2 jeweils ein Dämmmaterial mit hervorragenden Eigenschaften erhalten werden, welches insbesondere zum Einsatzzweck als Dämmschicht in Fußbodenaufbauten eignet. Festzuhalten ist dabei vor allem, dass sich das in der schüttfähigen Mischung 1 enthaltene Kaolin offensichtlich nicht drastisch auf die bauphysikalischen Eigenschaften einer solchen thermischen Dämmschicht auswirkt.

Wie aus den vorangehenden Versuchen ersichtlich, gewährleistet die erfindungsgemäße schüttfähige Mischung 1 zusätzlich zu ihrer guten Förderbarkeit sehr gute Eigenschaften im Hinblick auf Fußbodendämmungen, insbesondere eine möglichst niedrige Wärmeleitfähigkeit, gemeinsam mit einer sehr hohen Druckfestigkeit des Materials. Dies ist beachtlich, obwohl grundsätzlich bekannt ist, dass die Wärmedämmwerte mit der Porosität eines Materials steigen, wohingegen eine hohe Porosität hinsichtlich der Druckfestigkeit und damit der Belastbarkeit des Materials abträglich ist.

Zudem haben die Versuche gezeigt, dass die Zeitdauer für den hydraulischen Abbindevorgang relativ kurz ist, wodurch eine möglichst schnelle Begehbarkeit gewährleistet wird bzw. der Dämmbelag sehr schnell belegereif ist.

### Ausführungsbeispiel IV: Anwendung.

Auf einer Baustelle wird die schüttfähige Mischung zur Bildung der Dämm- und Ausgleichsschicht zum Beispiel mittels Fördereinrichtungen zum Ort der Aufbringung gefördert, nivelliert und geglättet und härtet diese anschließend hydraulisch aus.

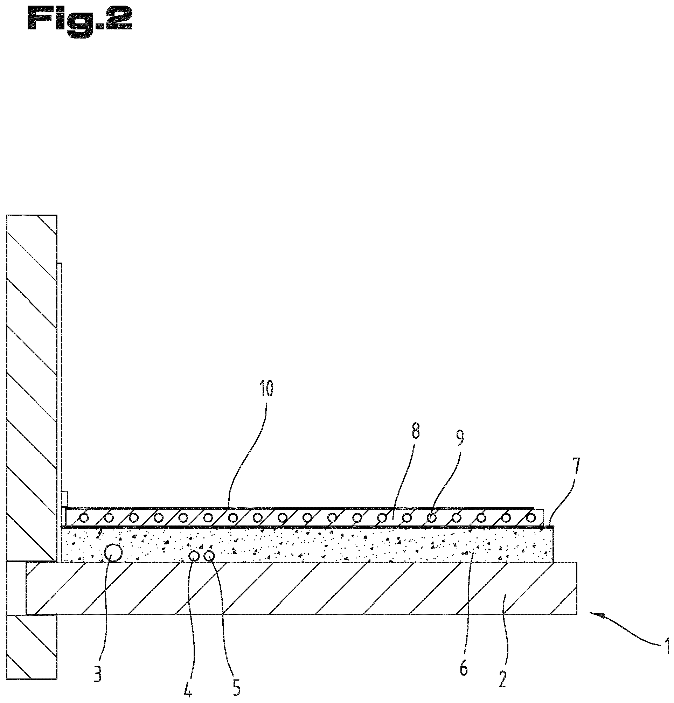

In der Fig. 2 ist ein Beispiel für die Anwendung der erfindungsgemäßen, schüttfähigen Mischung zur Bildung einer thermischen Dämm- und Ausgleichsschicht dargestellt. Im in Fig. 2 gezeigten Anwendungsbeispiel ist ein typischer, beispielhafter Fußbodenaufbau auf einer Zwischengeschoßdecke 1 gezeigt. Als tragendendes Element kann dabei zum Beispiel eine Stahlbetondecke 2 dienen, auf welcher weitere Aufbauten bzw. Installationen aufgebracht werden können. Bautechnisch werden bevorzugt auf diese Stahlbetondecke 2 diverse Gebäudeinstallationen verlegt, wie zum Beispiel die in Fig. 2 gezeigten Abflussrohre 3, Elektroinstallationen 4 und/oder Wasserrohre 5. Diese Haustechnik-Installationen 3, 4, 5stellen dabei Unebenheiten für weitere, aufzubringende Fußbodenaufbauten dar. Zum Niveauausgleich bzw. zur Bereitstellung einer ebenen Fläche für die weiteren Fußbodenaufbauten wird daher eine Niveauausgleichsschicht benötigt.

Hierzu ist die nach hydraulischem Abbinden der erfindungsgemäßen, schüttfähigen Mischung erhaltene thermische Dämmschicht 6 bzw. Ausgleichsschicht hervorragend geeignet. Zusätzlich bietet die erhaltene Dämm- und Ausgleichsschicht 6, wie bereits beschrieben, sehr gute Wärmedämmeigenschaften, und weist außerdem noch eine trittschallmindernde Wirkung auf, sodass mehrere vorteilhafte Eigenschaften nur durch diese eine Schicht 6 realisiert werden können.

Auf die ebene Fläche der thermischen Dämm- und Ausgleichsschicht 6, kann anschließend zum Beispiel eine sogenannte Dampfsperre 7, und anschließend der Estrich 8 verlegt werden. Gegebenenfalls kann die Estrichschicht 8 auch eine Fußbodenheizung 9 beinhalten. Schließlich kann auf den Estrich 8 der gewünschte Bodenbelag 10, zum Beispiel ein Parkettboden aufgebracht werden.

### Bezugszeichenaufstellung

- 1: Zwischengeschoßdecke
- 2: Stahlbetondecke
- 3: Abflussrohr
- 4: Elektroinstallation
- 5: Wasserrohr
- 6: Dämmschicht
- 7: Dampfsperre
- 8: Estrich
- 9: Fußbodenheizung
- 10: Bodenbelag

## Patentansprüche

1. Schüttfähige Mischung zur Bildung einer thermischen Dämm- und Ausgleichsschicht, insbesondere für Fußbodenaufbauten, welche schüttfähige Mischung durch einen nachfolgenden hydraulischen Abbindevorgang erhärtet, wobei die Mischung besteht aus:
- einer EPS-Trockenmischung,
bestehend aus
- 24 Gew.% expandiertes Polystyrol (EPS) in granularer, rieselfähiger Form, bestehend aus einem EPS-Partikel-Gemisch umfassend 50 Gew. % frisch geschäumte Polystyrol-Partikel mit einer Korngröße zwischen 3 und 8 mm und einer Schüttdichte zwischen 10 und 11 kg/m³ und 50 Gew. % rezykliertes, gegebenenfalls zerkleinertes EPS-Granulat, insbesondere rezyklierte, geschredderte EPS-Wärmedämmplatten oder Verpackungsstyrol mit einer Korngröße zwischen 0,1 und 9 mm und einer Schüttdichte zwischen 12 und 18 kg/m³,
- 76 Gew.% mineralische Bindemittel-Trockenmischung,
wobei die mineralische Bindemittel-Trockenmischung besteht aus
- 94 Gew.% Weißzement,
- 4 Gew.% Kieselsäure als Haftvermittler zwischen den EPS-Partikeln und dem Weißzement, und
- 2 Gew.% nicht aktiviertes Kaolin,
und wobei zu der EPS-Trockenmischung Wasser in einem Mengenanteil von 33 Gew. % - bezogen auf ein resultierendes Gesamtgewicht der schüttfähigen Mischung nach Abschließen eines Nass-Mischvorgangs - beigemengt ist.

2. Schüttfähige Mischung nach Anspruch 1, **dadurch gekennzeichnet, dass** das nicht aktivierte Kaolin eine spezifische Oberfläche zwischen 6,5 und 11,5 m²/g aufweist.

3. Schüttfähige Mischung nach Anspruch 1 oder 2, **dadurch gekennzeichnet, dass** das nicht aktivierte Kaolin einen Massenanteil von wenigstens 90 % an Kaolin-Teilchen mit einer Korngröße kleiner als 20 µm aufweist.

4. Schüttfähige Mischung nach einem der vorhergehenden Ansprüche, **dadurch gekennzeichnet, dass** der in der mineralischen Bindemittel-Trockenmischung enthaltene Weißzement ein gesichteter Weißzement ist.

5. Schüttfähige Mischung nach Anspruch 4, **dadurch gekennzeichnet, dass** der gesichtete Weißzement eine spezifische Oberfläche nach Blaine von zumindest 3.000 cm²/g, und bis zu 10.000 cm²/g aufweist.

6. Schüttfähige Mischung nach einem der vorhergehenden Ansprüche, **dadurch gekennzeichnet, dass** der zur Herstellung des mineralischen Bindemittels verwendete Weißzement keine Chromatreduziermittel aufweist.

7. Schüttfähige Mischung nach einem der vorhergehenden Ansprüche, **dadurch gekennzeichnet, dass** die in der mineralischen Bindemittel-Trockenmischung enthaltene Kieselsäure eine spezifische Oberfläche von zumindest 10 m²/g, insbesondere zwischen 16 m²/g und 20 m²/g aufweist.

8. Schüttfähige Mischung nach einem der vorhergehenden Ansprüche, **dadurch gekennzeichnet, dass** die Mischung eine Frischmörtel-Rohdichte zwischen 85 kg/m³ und 100 kg/m³, insbesondere zwischen 90 kg/m³ und 95 kg/m³ aufweist.

9. Verfahren zur Herstellung einer schüttfähigen Mischung zur Bildung einer thermischen Dämm- und Ausgleichsschicht, insbesondere für Fußbodenaufbauten, welche schüttfähige Mischung durch einen nachfolgenden hydraulischen Abbindevorgang erhärtet, **gekennzeichnet durch** folgende, sequentiell nacheinander ausgeführte Verfahrensschritte:
- Bereitstellen von expandierten EPS-Partikeln, bestehend aus einem EPS-Partikel-Gemisch umfassend 50 Gew. % frisch geschäumte Polystyrol-Partikel mit einer Korngröße zwischen 3 und 8 mm und einer Schüttdichte zwischen 10 und 11 kg/m³ und 50 Gew. % rezykliertes, gegebenenfalls zerkleinertes EPS-Granulat, insbesondere rezyklierte, geschredderte EPS-Wärmedämmplatten oder Verpackungsstyrol mit einer Korngröße zwischen 0,1 und 9 mm und einer Schüttdichte zwischen 12 und 18 kg/m³, insbesondere mit einer Korngröße zwischen 0,1 und 9 mm, in einem Mengenanteil von 24 Gew. %;
- Bereitstellen einer mineralischen Bindemittel-Trockenmischung in einem Mengenanteil von 76 Gew.%, wobei die mineralische Bindemittel-Trockenmischung aus 94 Gew.% Weißzement und 4 Gew.% Kieselsäure als Haftvermittler zwischen den EPS-Partikeln und dem Weißzement und 2 Gew.% nicht aktiviertes Kaolin besteht,
- Trockenes Vermengen bzw. Mischen der bereitgestellten EPS-Partikel mit der bereitgestellten mineralischen Bindemittel-Trockenmischung zur Bildung einer EPS-Trockenmischung;
- Beimengen von Wasser zu der EPS-Trockenmischung in einem Mengenanteil von 33 Gew. % - bezogen auf ein resultierendes Gesamtgewicht der schüttfähigen Mischung nach Abschließen eines Nass-Mischvorgangs.

10. Thermische Dämm- und Ausgleichsschicht, welche durch hydraulisches Abbinden einer schüttfähigen Mischung gemäß einem der Ansprüche 1-8 hergestellt ist.

11. Thermische Dämm- und Ausgleichsschicht nach Anspruch 10, **dadurch gekennzeichnet, dass** die Dämm- und Ausgleichsschicht eine Wärmeleitfähigkeit von 0,042 W/mK sowie eine Druckspannung bei 10% Stauchung von 82 kPa aufweist.

## Claims

1. A pourable mixture for forming a thermal insulating and leveling layer, in particular for floor structures, said pourable mixture being hardened by a following hydraulic setting processes, wherein the mixture consists of:
- an EPS dry mixture,
consisting of
- 24 wt.% expanded polystyrene (EPS) in granular, free-flowing form, consisting of an EPS particle mixture comprising 50 wt.% freshly foamed polystyrene particles with a grain size of between 3 and 8 mm and a bulk density of between 10 and 11 kg/m³ and 50 wt.% recycled, optionally comminuted EPS granules, in particular recycled, shredded EPS heat insulation boards or packaging styrene with a grain size between 0.1 and 9 mm and a bulk density between 12 and 18 kg/m³,
- 76 wt.% mineral binder dry mixture,
wherein the mineral binder dry mixture consists of
- 94 wt.% white cement,
- 4 wt.% silica as adhesion promoter between the EPS particles and the white cement, and
- 2 wt.% non-activated kaolin
and wherein water is added to the EPS dry mixture in an amount of 33 wt.% - with respect to a resulting total weight of the pourable mixture after completion of a wet mixing process.

2. The pourable mixture according to claim 1, **characterized in that** the non-activated kaolin has a specific surface area between 6.5 and 11.5 m²/g.

3. The pourable mixture according to claim 1 or 2, **characterized in that** the non-activated kaolin has a mass fraction of at least 90% of kaolin particles with a grain size of less than 20 µm.

4. The pourable mixture according to one of the preceding claims, **characterized in that** the white cement contained in the mineral binder dry mixture is a screened white cement.

5. The pourable mixture according to claim 4, **characterized in that** the screened white cement has a Blaine specific surface of at least 3,000 cm²/g, and up to 10,000 cm²/g.

6. The pourable mixture according to one of the preceding claims, **characterized in that** the white cement used to produce the mineral binder does not contain chromate reducing agents.

7. The pourable mixture according to one of the preceding claims, **characterized in that** the silica contained in the mineral binder dry mixture has a specific surface of at least 10 m²/g, in particular between 16 m²/g and 20 m²/g.

8. The pourable mixture according to one of the preceding claims, **characterized in that** the mixture has a green mortar raw density of between 85 kg/m³ and 100 kg/m³, in particular between 90 kg/m³ and 95 kg/m³.

9. A method for producing a pourable mixture for forming a thermal insulating and leveling layer, in particular for floor structures, said pourable mixture being hardened by a following hydraulic setting processes, **characterized by** the following, sequentially successive method steps:
- providing expanded EPS particles, consisting of an EPS particle mixture comprising 50 wt.% freshly foamed polystyrene particles with a grain size of between 3 and 8 mm and a bulk density of between 10 and 11 kg/m³ and 50 wt.% recycled, optionally comminuted EPS granules, in particular recycled, shredded EPS heat insulation boards or packaging styrene with a grain size between 0.1 and 9 mm and a bulk density between 12 and 18 kg/m³, in particular with a grain size of between 0.1 and 9 mm, in a proportion of 24 wt.%;
- providing a mineral binder dry mixture in an amount of 76 wt.%, wherein the mineral binder dry mixture consists of 94 wt.% white cement and 4 wt.% silica as adhesion promoter between the EPS particles and the white cement and 2 wt.% non-activated kaolin,
- dry blending or mixing of the provided EPS particles with the provided mineral binder dry mixture to form an EPS dry mixture;
- adding water to the EPS dry mixture in an amount of 33 wt.% - with respect to a resulting total weight of the pourable mixture after completion of a wet mixing process.

10. A thermal insulating and leveling layer, which is produced by hydraulic setting of a pourable mixture according to one of claims 1-8.

11. The thermal insulating and leveling layer according to claim 10, **characterized in that** the insulation and compensation layer has a thermal conductivity of 0.042 W/mK and a compressive stress at 10% compression of 82 kPa.

## Revendications

1. Mélange à écoulement libre pour la formation d'une couche d'isolation thermique et de nivellement, en particulier pour des systèmes de plancher, lesdits mélanges à écoulement libre durcissant sous l'effet d'un processus de prise hydraulique mis en œuvre ensuite, le mélange consistant en :
- un mélange sec d'EPS, consistant en
- 24 % en poids de polystyrène expansé (EPS) sous forme granulaire à écoulement libre, consistant en un mélange de particules d'EPS comprenant 50 % en poids de particules de polystyrène fraîchement expansé ayant une granulométrie comprise entre 3 et 8 mm et une masse volumique apparente comprise entre 10 et 11 kg/m³ et 50 % en poids d'un granulé d'EPS recyclé, éventuellement broyé, en particulier des plaques d'isolation thermique en EPS recyclé, déchiqueté, ou un polystyrène pour emballage ayant une granulométrie comprise entre 0,1 et 9 mm et une masse volumique apparente comprise entre 12 et 18 kg/m³,
- 76 % en poids d'un mélange sec de liants minéraux, le mélange sec de liants minéraux consistant en
- 94 % en poids de ciment blanc,
- 4 % en poids de silice en tant que promoteur d'adhérence entre les particules d'EPS et le ciment blanc, et
- 2 % en poids de kaolin non activé,
de l'eau étant ajoutée au mélange sec d'EPS, selon une proportion pondérale de 33 % en poids, par rapport au poids total résultant du mélange à écoulement libre après la fin de l'opération de mélange par voie humide.

2. Mélange à écoulement libre selon la revendication 1, **caractérisé en ce que** le kaolin non activé présente une aire spécifique comprise entre 6,5 et 11,5 m²/g.

3. Mélange à écoulement libre selon la revendication 1 ou 2, **caractérisé en ce que** le kaolin non activé présente une proportion en masse inférieure à 90 % de particules de kaolin ayant une granulométrie inférieure à 20 µm.

4. Mélange à écoulement libre selon l'une des revendications précédentes, **caractérisé en ce que** le ciment blanc contenu dans le mélange sec de liants minéraux est un ciment blanc tamisé.

5. Mélange à écoulement libre selon la revendication 4, **caractérisé en ce que** le ciment blanc tamisé présente une aire spécifique, par la méthode de Blaine, d'au moins 3000 cm²/g, et allant jusqu'à 10 000 cm²/g.

6. Mélange à écoulement libre selon l'une des revendications précédentes, **caractérisé en ce que** le ciment blanc utilisé pour la fabrication du liant minéral ne contient pas de réducteur de chromate.

7. Mélange à écoulement libre selon l'une des revendications précédentes, **caractérisé en ce que** la silice contenue dans le mélange sec de liants minéraux présente une aire spécifique d'au moins 10 m²/g, en particulier comprise entre 16 m²/g et 20 m²/g.

8. Mélange à écoulement libre selon l'une des revendications précédentes, **caractérisé en ce que** le mélange présente une masse volumique apparente du mortier frais comprise entre 85 kg/m³ et 100 kg/m³, en particulier entre 90 kg/m³ et 95 kg/m³.

9. Procédé de fabrication d'un mélange à écoulement libre pour la formation d'une couche d'isolation thermique et de nivellement, en particulier pour des systèmes de plancher, le mélange à écoulement libre durcissant sous l'effet d'un processus de prise hydraulique mis en œuvre ensuite, **caractérisé par** les étapes suivantes, mises en œuvre séquentiellement et successivement :
- fourniture, selon une proportion pondérale de 24 % en poids, de particules d'EPS expansé, consistant en un mélange de particules d'EPS comprenant 50 % en poids de particules de polystyrène fraîchement expansé ayant une granulométrie comprise entre 3 et 8 mm et une masse volumique apparente comprise entre 10 et 11 kg/m³ et 50 % en poids d'un granulé d'EPS recyclé, éventuellement broyé, en particulier des plaques d'isolation thermique en EPS recyclé, déchiqueté, ou un polystyrène pour emballage ayant une granulométrie comprise entre 0,1 et 9 mm et une masse volumique apparente comprise entre 12 et 18 kg/m³, en particulier une granulométrie comprise entre 0,1 et 9 mm ;
- fourniture d'un mélange sec de liants minéraux selon une proportion pondérale de 76 % en poids, le mélange sec de liants minéraux consistant en 94 % en poids de ciment blanc et 4 % en poids de silice en tant que promoteur d'adhérence entre les particules d'EPS et le ciment blanc, et 2 % en poids de kaolin non activé,
- addition ou mélange à sec des particules d'EPS fournies, avec le mélange sec de liant minéral fourni, pour la formation d'un mélange sec d'EPS ;
- addition d'eau au mélange sec d'EPS selon une proportion pondérale de 33 % en poids - par rapport au poids total résultant du mélange à écoulement libre après la fin de l'opération de mélange par voie humide.

10. Couche d'isolation thermique et de nivellement, qui est fabriquée par prise hydraulique d'un mélange à écoulement libre selon l'une des revendications 1 à 8.

11. Couche d'isolation thermique et de nivellement selon la revendication 10, **caractérisée en ce que** la couche d'isolation et de nivellement présente une conductivité thermique de 0,042 W/mK ainsi qu'une contrainte de compression pour une déformation de 10 % de 82 kPa.
